# EUROPÄISCHE PATENTANMELDUNG

(11) **EP 1 520 737 A1**
(43) Veröffentlichungstag der Anmeldung: **06.04.2005**
(21) Anmeldenummer: 04104811.7
(22) Anmeldetag: 30.09.2004
(51) Int. Cl.: B60H 1/00, B60H 1/32

(54) **Kühlvorrichtung für ein Arbeitsfahrzeug mit einem Primärkreislauf und einem Sekundärkreislauf und Fahrzeug**

(30) Priorität: 30.09.2003 US 675618
(71) Anmelder: DEERE & COMPANY, Moline, Illinois 61265-8098 (US)
(72) Erfinder: Boyer, Jack Clyde, Reinbeck, IA 50669 (US); Warner, Frederick Lamont, Buckingham, IA 50612 (US)
(74) Vertreter: Holst, Sönke, Dr.

(57) **Zusammenfassung**

Die vorliegende Erfindung betrifft eine Verteilte Kühlvorrichtung für ein Arbeitsfahrzeug mit einem Primärkreislauf (12) und einem Sekundärkreislauf (14). Der Primärkreislauf (12) ist mit einem Kältemittel betreibbar und weist einen Kompressor (16) und einen Kondensator (18) auf. Der Sekundärkreislauf (14) umfasst eine Kühlmittelpumpe (24), mindestens eine Kühlmittelleitung (32), mindestens eine Rücklaufleitung (34), mindestens einen Kühlmittel-Luft-Wärmetauscher (26) und mindestens einen Lüfter (28). Mit der Kühlmittelpumpe (24) ist Kühlmittel zu mindestens einem Kühlmittel-Luft-Wärmetauscher (26A - 26C) pumpbar. Jedem Kühlmittel-Luft-Wärmetauscher (26A - 26C) ist jeweils ein Lüfter (28A - 28C) zugeordnet. Der Sekundärkreislauf (14) ist über einen Kühlmittel-Kältemittel-Wärmetauscher (30) mit dem Primärkreislauf (12) gekoppelt, wodurch Kühlmittel des Sekundärkreislaufs (14) von dem Kältemittel des Primärkreislaufs (12) kühlbar ist. Mit der Kühlmittelleitung (32) ist gekühltes Kühlmittel zu den Kühlmittel-Luft-Wärmetauschern (26A - 26C) leitbar. Mit der Rücklaufleitung (34) ist Kühlmittel zurück zur Pumpe (24) und zum Kühlmittel-Kältemittel-Wärmetauscher (30) leitbar. Die Kühlmittelleitung (32) und die Rücklaufleitung (34) verlaufen durch die Wand (36) einer Kabine (38) für einen Bediener (40). Mindestens ein Kühlmittel-Luft-Wärmetauscher (26C) ist in einem vorderen Bereich der Kabine (38) - vorzugsweise in einer vorderen Konsole des Fahrzeugs - im Wesentlichen vor dem Bediener (40) angeordnet. Mindestens einer der Kühlmittel-Luft-Wärmetauscher (26A, 26B) ist oberhalb und seitlich vor oder hinter dem Kopf des Bedieners (40) angeordnet. Mindestens ein einem Kühlmittel-Luft-Wärmetauscher (26A - 26C) zugeordneter Lüfter (28A - 28C) ist individuell ansteuerbar, um den Luftfluss durch den entsprechenden Kühlmittel-Luft-Wärmetauscher (26A - 26C) in Abhängigkeit der Bedürfnisse des Bedieners (40) einstellen zu können. Des Weiteren betrifft die vorliegende Erfindung ein Fahrzeug mit einer verteilten Kühlvorrichtung.

## Beschreibung

Die Erfindung betrifft ein System betreffend einer Heizung, Belüftung und/oder Klimaanlage, nämlich ein sogenanntes HVAC-System (Heating, Ventilation, Air-Conditioning-System). Insbesondere betrifft die vorliegende Erfindung ein Klimaanlagen-System, welches zum Einsatz in Fahrzeugen geeignet ist. Insbesondere betrifft die vorliegende Erfindung eine verteilte Kühlvorrichtung mit zwei Kreisläufen. Des Weiteren betrifft die vorliegende Erfindung ein Fahrzeug mit einer verteilten Kühlvorrichtung.

Aufgrund aktueller Bedenken bezüglich der globalen Erwärmung (Treibhauseffekt) sind Bestrebungen unternommen worden, die als Kältemittel in Klimaanlagensystemen verwendeten Fluorierte-Kohlenwasserstoffe (HFC) durch umweltfreundlichere Alternativen zu ersetzen. Als Alternativen wurden Kohlendioxide (CO2) oder brennbare Kohlenwasserstoffe/Kohlenwasserstoffverbindungen (HC) in Erwägung gezogen, welche zwar umweltfreundlicher aber hinsichtlich einer praktischen Verwendung in konventionellen Klimaanlagen-Systemen aufgrund der potenziellen Gefahr, dass ein Mensch in Kontakt mit dem Kältemittel kommt, nicht geeignet zu sein scheinen. Dementsprechend wurden Klimaanlagen-Systeme in Erwägung gezogen, welche zwei Kreisläufe aufweisen, um Kohlendioxide (CO2) oder Hydrokarbonate (HC) verwenden zu können und um die potenzielle Gefahr des Kontakts mit einem Menschen zu reduzieren. Zweikreislauf-Systeme weisen üblicherweise einen konventionellen Primärkreislauf einer Klimaanlage auf, welche CO2, HFC oder HC als Kältemittel verwenden und welche einen Kompressor, einen Kondensator, einen Trockner und ein Expansionsventil aufweisen. Diese Komponenten sind mit einem zweiten Kreislauf mit Kühlmittelflüssigkeit gekoppelt, welcher einen Kühlmittel-Kältemittel-Wärmetauscher, eine Kühlmittelpumpe und einen Kühlmittel-Luft-Wärmetauscher aufweist. Das Kältemittel des Primärkreislaufs wird zum Abkühlen des Kühlmittels des Sekundärkreislaufs verwendet. Alle Komponenten mit Ausnahme des Kühlmittel-Luft-Wärmetauschers und der Kühlmittelleitungen sind außerhalb des Fahrgastinnenraums angeordnet. Die Kühlmittelleitungen für den Kühlmittel-Luft-Wärmetauscher sind zu dem Kühlmittel-Kältemittel-Wärmetauscher in dem Fahrgastinnenraum verlegt. Somit ist die potenzielle Gefahr eines menschlichen Kontakts mit dem Kältemittel bzw. eine durch das Kältemittel verursachte Verletzungsgefahr des Fahrgastes wesentlich verringert, wobei mehr Freiheiten bei dem Einsatz des Kältemittels gegeben sind.

Die Praktikabilität der Verwendung nicht-inerter HC als Ersatz für HFC bei Klimaanlagen-Systemen für Fahrzeuge ist in der SAE-Veröffentlichung mit der Nummer 1999-01-0874 und dem Titel "An Investigation of R152a and Hydrocarbon Refrigerants in Mobile Air Conditioning" von Mahmoud Ghodbane beschrieben. Der gleiche Autor hat des Weiteren die Vorteile von Zweikreis-Systemen für Fahrzeuganwendungen in der SAE-Publikation mit der Nummer 2000-01-1270 und dem Titel "On Vehicle Performance of a Secondary Loop A/C System" beschrieben.

An Klimaanlagen-Systeme für die Verwendung in Arbeitsfahrzeugen, insbesondere in landwirtschaftlichen Traktoren, sind ganz spezielle Anforderungen gestellt. Da solche Fahrzeuge während des Betriebs sehr viel Abwärme generieren und mit geringen Geschwindigkeiten über einen langen Zeitraum betrieben werden, ist der Bedarf an Klimaanlagen-Systemen größer als es bei den Straßenfahrzeugen der Fall ist. Fahrgastinnenräume bzw. Fahrzeugkabinen für solche Fahrzeuge unterscheiden sich wesentlich von den Fahrgastinnenräumen von Automobilen, beispielsweise dadurch, dass Kältemittelleitungen grundsätzlich länger ausgeführt sind, der Abstand zwischen Luftdüsen und einem Bediener größer ist sowie der Abstand, über den Kanalleitungen bzw. Luftleitungen zu verlegen sind, ebenfalls größer ist. Solche Kanalleitungen werden regelmäßig entlang von Komponenten verlegt, welche eine hohe Wärmeentwicklung aufweisen, so dass die Kühlleistung der zu bewegenden Luft hierdurch verringert wird. Eine Verwendung eines einzelnen Verdampfers erfordert eine Kanalleitung großen Querschnitts, um den Druckabfall/Druckgefälle auf der Luftseite zu verringern, wodurch die Sichtverhältnisse vom Inneren der Kabine negativ beeinträchtigt werden. Weiterhin ist das Ausmaß der Verglasung der Kabinenwand größer als das früher der Fall wahr, um nämlich eine verbesserte bzw. optimale Sicht für einen Bediener beispielsweise während Feldarbeiten zu gewährleisten. Hierdurch erhöht sich allerdings auch die von der Sonne erzeugte Wärme in der Kabine. Auch die Anstrengungen, um neuen Emissionsrichtlinien gerecht zu werden, erfordern eine Erhöhung der Motorleistung, wodurch letztendlich auch die von dem Antriebssystem erzeugte Wärme erhöht wird. Somit ist es stets erforderlich, die Effektivität und Leistungsfähigkeit der in solchen Fahrzeugen eingesetzten Klimaanlagen-Systemen bei einer Verringerung der Last auf den Verbrennungsmotor zu verbessern, wobei ein hoher Bedienerkomfort für einen Bediener erzielt werden kann.

Die der Erfindung zugrunde liegende Aufgabe wird darin gesehen, eine Kühlvorrichtung und ein Fahrzeug der eingangs genannten Art anzugeben, durch die die vorgenannten Probleme überwunden werden. Insbesondere soll eine verteilte Kühlvorrichtung für ein Nutzfahrzeug und ein Fahrzeug angegeben und weitergebildet werden, die bzw. das eine räumlich verteilte Kühlung innerhalb einer Kabine für einen Bediener eines Fahrzeugs zur Verfügung stellt, welcher eine verbesserte Effizienz bzw. einen verbesserten Wirkungsgrad gegenüber herkömmlicher Kühlsysteme aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Kühlvorrichtung gemäß Patentanspruch 1 ist insbesondere für ein Arbeitsfahrzeug geeignet und umfasst einen Primärkreislauf und einen Sekundärkreislauf. Der Primärkreislauf ist mit einem Kältemittel betreibbar und weist einen Kompressor und einen Kondensator auf. Der Sekundärkreislauf umfasst eine Kühlmittelpumpe, mindestens eine Kühlmittelleitung, mindestens eine Rücklaufleitung, mindestens einen Kühlmittel-Luft-Wärmetauscher und mindestens einen Lüfter. Mit der Kühlmittelpumpe ist Kühlmittel zu mindestens einem Kühlmittel-Luft-Wärmetauscher pumpbar. Jedem Kühlmittel-Luft-Wärmetauscher ist jeweils ein Lüfter zugeordnet. Der Sekundärkreislauf ist über einen Kühlmittel-Kältemittel-Wärmetauscher mit dem Primärkreislauf gekoppelt, wodurch Kühlmittel des Sekundärkreislaufs von dem Kältemittel des Primärkreislaufs kühlbar ist. Mit der Kühlmittelleitung ist gekühltes Kühlmittel zu den Kühlmittel-Luft-Wärmetauschern leitbar. Mit der Rücklaufleitung ist Kühlmittel zur Pumpe und zum Kühlmittel-Kältemittel-Wärmetauscher leitbar. Die Kühlmittelleitung und die Rücklaufleitung verlaufen durch die Wand einer Kabine für einen Bediener. Mindestens ein Kühlmittel-Luft-Wärmetauscher ist in einem vorderen Bereich der Kabine - vorzugsweise in einer vorderen Konsole des Fahrzeugs - im Wesentlichen vor dem Bediener angeordnet. Mindestens einer der Kühlmittel-Luft-Wärmetauscher ist oberhalb und seitlich vor oder hinter dem Kopf des Bedieners angeordnet. Mindestens ein einem Kühlmittel-Luft-Wärmetauscher zugeordneter Lüfter ist individuell ansteuerbar, um den Luftfluss durch den entsprechenden Kühlmittel-Luft-Wärmetauscher in Abhängigkeit der Bedürfnisse des Bedieners einstellen zu können.

In einer ganz besonders bevorzugten Ausführungsform ist eine verteilte Kühlvorrichtung für ein Arbeitsfahrzeug vorgesehen. Die Kühlvorrichtung umfasst einen Primärkreislauf und einen Sekundärkreislauf. Der Primärkreislauf umfasst einen konventionellen Klimaanlagen-Kreislauf mit einem Kompressor, einem Kondensator, einem Trockner und einem Expansionsventil. Der Sekundärkreislauf umfasst eine Kühlmittelpumpe und eine Vielzahl von Kühlmittel-Luft-Wärmetauschern, welchen jeweils ein Lüfter zugeordnet ist. Der Sekundärkreislauf ist mit dem Primärkreislauf über einen Kühlmittel-Kältemittel-Wärmetauscher gekoppelt, wobei das Kühlmittel des Sekundärkreises gekühlt wird. Das abgekühlte Kühlmittel wird zu dem Kühlmittel-Luft-Wärmetauscher mit Hilfe von Leitungen und zurück zur Kühlmittelpumpe und zum Kühlmittel-Kältemittel-Wärmetauscher über die Rücklaufleitungen zirkuliert. Die Kühlmittelleitung beziehungsweise Rücklaufleitung sind durch die Wand einer Kabine für einen Bediener verlegt. Mindestens ein Kühlmittel-Luft-Wärmetauscher ist in einem vorderen Bereich der Kabine in einer Konsole des Fahrzeugs im Wesentlichen vor einem Bediener angeordnet hat. Zwei Kühlmittel-Luft-Wärmetauscher sind auf beiden Seiten und oberhalb des Kopfs eines Bedieners angeordnet, und zwar vorzugsweise - in Fahrtrichtung gesehen - vor oder hinter dem Kopf des Bedieners. Diese räumliche Angabe bezieht sich insbesondere auf die Position des Kopfes des Bedieners in seiner bestimmungsgemäßen Benutzung/Bedienung des Fahrzeugs in der Kabine. Zusätzliche Kühlmittel-Luft-Wärmetauscher können an anderen Stellen in der Kabine angeordnet sein, um eine weitere verteilte Kühlung sicherzustellen und/oder um möglicherweise heiße Stellen innerhalb der Kabine auszugleichen. Die den Kühlmittel-Luft-Wärmetauschern zugeordneten Lüfter könnten jeweils individuell ansteuerbar sein, um den Luftfluss bzw. die Luftmenge pro Zeiteinheit durch den jeweiligen Wärmetauscher entsprechend den Bedürfnissen des Bedieners anzusteuern. Die Verwendung mehrerer kompakter Wärmetauscher, die an verschiedenen Orten bzw. Stellen innerhalb der Kabine angeordnet sind, ermöglichen eine verbesserte bzw. effizientere Kühlung, als das mit einem einzelnen großen Wärmetauscher möglich wäre. Der Einsatz eines Sekundärkreislaufsystems ermöglicht eine von der Kabine entfernten Anordnung der meisten Systemkomponenten, wodurch die Gefahr eines Kontakts des Kältemittels mit dem Bediener vermindert wird. Dies ermöglicht weiterhin, dass die Kältemittelleitungen kürzer ausgelegt werden können, so dass auch hierdurch die Effizienz des Kältemittelkreislaufs bzw. des Primärkreislaufs verbessert werden kann.

Grundsätzlich ist vorgesehen, mit Hilfe der Lüfter Luft aus der Kabine oder Luft aus der äußeren Umgebung des Fahrzeugs durch die Kühlmittel-Luft-Wärmetauscher zu leiten. Unter einer Kabine im Sinn der vorliegenden Erfindung ist insbesondere der einen Bediener oder Fahrgast umgebende Raum zu verstehen, der gegenüber der Umgebung durch eine Kabinenwand und/oder eine Kabinenverglasung abgegrenzt ist.

Hinsichtlich eines Fahrzeugs wird die eingangs genannte Aufgabe durch die Merkmale des Patentanspruchs 11 gelöst. Hiernach weist ein Fahrzeug, insbesondere ein industrielles oder landwirtschaftliches Nutzfahrzeug, vorzugsweise eine Kühlvorrichtung nach einem der Ansprüche 1 bis 10 auf. Das Fahrzeug umfasst einen Fahrzeugrahmen, eine Kabine, einen Primärkreislauf und einen Sekundärkreislauf. Die Kabine ist an dem Fahrzeugrahmen angeordnet und weist eine Kabinenwand auf. Der Primärkreislauf ist außerhalb der Kabine angeordnet. Der Sekundärkreislauf ist über einen Kühlmittel-Kältemittel-Wärmetauscher mit dem Primärkreislauf gekoppelt. Mindestens eine Kühlmittelleitung und mindestens eine Rücklaufleitung sind vorgesehen, welche durch die Kabinenwand der Kabine verlaufen. Eine Kühlmittelleitung ist mit dem Kühlmittel-Kältemittel-Wärmetauscher verbunden und eine Rücklaufleitung ist mit einer Kühlmittelpumpe des Sekundärkreislaufs verbindbar. Die Kühlmittelpumpe ist mit dem Kühlmittel-Kältemittel-Wärmetauscher verbunden. Mindestens zwei Kühlmittel-Luft-Wärmetauscher sind vorgesehen, welchen jeweils ein Lüfter zugeordnet ist. Die Kühlmittel-Luft-Wärmetauscher sind an unterschiedlichen Orten in der Kabine angeordnet und mit einer Kühlmittelleitung und einer Rücklaufleitung verbunden. Der Kühlmittel-Kältemittel-Wärmetauscher und die Kühlmittelpumpe sind außerhalb der Kabine angeordnet. Das Kühlmittel ist von dem Kühlmittel-Kältemittel-Wärmetauscher abkühlbar und ist zu den Kühlmittel-Luft-Wärmetauschern in die Kabine pumpbar, um einem Bediener eine verteilte Kühlung zur Verfügung zu stellen.

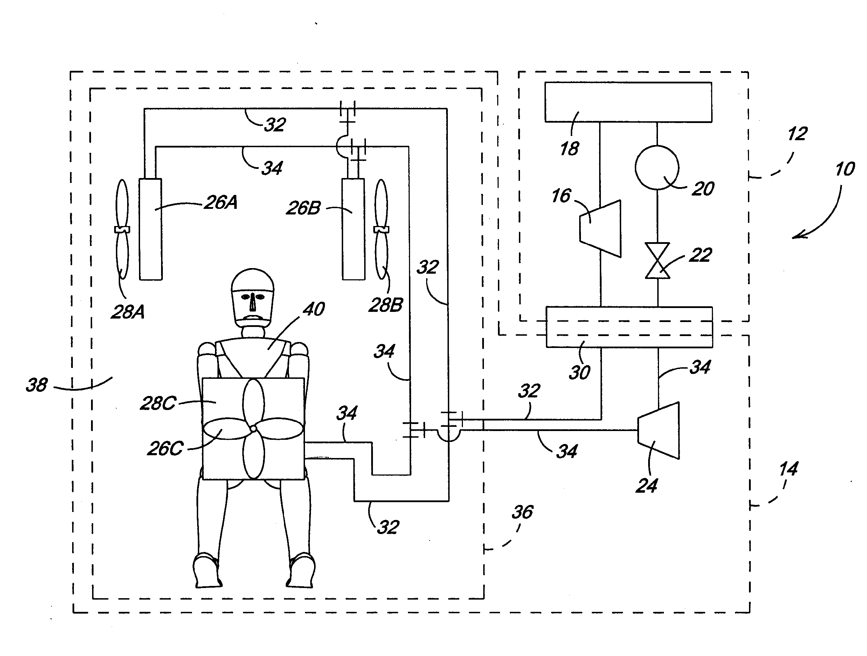

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt die einzige
- Fig.: eine schematische Darstellung eines erfindungsgemäßen Ausführungsbeispiels eines Teils eines verteilten Kühlsystems in Beziehung zu einer Fahrzeugkabine für einen Bediener.

In der Fig. ist ein erfindungsgemäßes verteiltes Kühlsystem für eine Fahrzeugkabine 38 eines Arbeitsfahrzeugs mit dem Bezugszeichen 10 gekennzeichnet. Das Kühlsystem 10 umfasst einen Primärkreislauf 12 und einen Sekundärkreislauf 14. Der Primärkreislauf 12 umfasst eine herkömmliche Klimaanlage - A/C - welche einen Kompressor 16, einen Kondensator 18, einen Trockner 20 und ein Expansionsventil 22 aufweist. Anstelle des Trockners 20 und des Expansionsventils 22 könnte auch ein Sammler/Akkumulator und eine Fixdrossel verwendet werden. Für den Primärkreislauf 12 ist bevorzugt C02 (Kohlendioxid), HC oder HCF als Kältemittel vorgesehen. Der Sekundärkreislauf 14 umfasst im Wesentlichen eine Kühlmittelpumpe 24 und eine Vielzahl von Kühlmittel-Luft-Wärmetauschern 26, nämlich 26A, 26B, 26C, wobei in jedem Wärmetauscher 26 ein Lüfter 28 zugeordnet ist. Für den Sekundärkreislauf 14 ist bevorzugt ein flüssiges Kühlmittel vorgesehen, welches Ethylenglykol oder ein Glykol-Wasser-Gemisch aufweist. Der Sekundärkreislauf 14 ist mit einem Kühlmittel-Kältemittel-Wärmetauscher 30 an den Primärkreislauf 12 gekoppelt, wobei mit dem Kühlmittel-Kältemittel-Wärmetauscher 30 das Kühlmittel des Sekundärkreislaufs 14 abgekühlt wird. Das abgekühlte Kühlmittel wird zu den Kühlmittel-Luft-Wärmetauschern 26 mit Hilfe der Kühlmittelleitungen 32 und zurück zur Kühlmittelpumpe 24 und dem Kühlmittel-Kältemittel-Wärmetauscher 30 über die Rücklaufleitungen 34 zirkuliert. Die Kühlmittel-Luft-Wärmetauscher 26 sind bezüglich der Leitungen 32, 34 parallel geschaltet bzw. angeordnet. Eine serielle Verschaltung der Kühlmittel-Luft-Wärmetauscher 26 wäre ebenfalls denkbar. Die Leitungen 32, 34 verlaufen durch die Wand 36 einer Begrenzung bzw. einer Kabine 38 für einen Fahrzeugbediener 40.

Bevorzugt ist mindestens ein Kühlmittel-Luft-Wärmetauscher 26C in einem auf vorderen Bereich der Kabine 38 in einer Konsole des Fahrzeugs im Wesentlichen vor dem Bediener 40 angeordnet, wodurch die Sicht des Bedieners nicht oder so wenig wie möglich eingeschränkt wird. Diese Position des Wärmetauschers 26C stellt einem Bediener 40 eine örtlich begrenzte Kühlung - in Form eines Luftstroms - zur Verfügung, wobei eine im Wesentlichen uneingeschränkte Sicht nach vorne aus der Fahrzeugkabine 38 für den Bediener 40 möglich ist. In vergleichbarer Weise ist/sind bevorzugt ein oder mehrere Kühlmittel-Luft-Wärmetauscher 26A, 26B seitlich oberhalb und vor oder hinter dem Kopf des Bedieners angeordnet. Diese Position des/der Wärmetauscher(s) 26A, 26B stellt einem Bediener eine zusätzliche örtlich begrenzte Kühlung zur Verfügung, wobei ebenfalls die Sicht des Bedieners 40 seitlich aus der Kabine 38 heraus nicht oder nur unwesentlich eingeschränkt wird. Weiterhin wäre es denkbar, einen Kühlmittel-Luft-Wärmetauscher unmittelbar über dem Kopf eines Bedieners 40 anzuordnen, falls dort nicht etwas anderes in der Fahrzeugkabine 38 vorgesehen ist, beispielsweise ein Schiebedach/Sonnendach. In gleicher Weise könnten weitere Wärmetauscher an weiteren Positionen innerhalb des von der Kabine begrenzten Raums vorgesehen sein, um eine weitere verteilte Kühlung zur Verfügung zu stellen und/oder um heiße Stellen innerhalb der Kabine auszugleichen.

Es könnten auch ein oder mehrere Steuerventile in dem Sekundärkreislauf 14 vorgesehen sein, um den Kühlmittelfluss zu den jeweiligen Kühlmittel-Luft-Wärmetauschern 26 zu steuern oder zu regeln. Die den Kühlmittel-Luft-Wärmetauschern 26 zugeordneten Lüfter 28 könnten jeweils individuell ansteuerbar sein, um den Luftfluss durch den jeweiligen Wärmetauscher 26 entsprechend den Bedürfnissen des Bedieners anzusteuern oder zu regeln, beispielsweise durch die Verwendung von Geschwindigkeitsreglern für die Lüfter 28. Es wäre auch denkbar, - vorzugsweise verschließbare - Luftdüsen bzw. Luftgitter zu verwenden, um den Luftfluss von den Lüftern 28 zu steuern, beispielsweise in der Austrittsrichtung aus den Luftdüsen.

Da die Wärmetauscher 26 und die Lüfter 28 an unterschiedlichen Orten zur Kühlung eines jeweils begrenzten Raums oder einer begrenzten Stelle vorgesehen sind, ist es möglich, kleinere Wärmetauscher und Lüfter zu verwenden, als das der Fall wäre, wenn lediglich ein einzelner Wärmetauscher verwendet werden würde.

Die Verwendung mehrerer kompakter Wärmetauscher, die an verschiedenen Orten bzw. Stellen innerhalb der Kabine angeordnet sind, ermöglichen eine effizientere Kühlung, als das mit einem einzelnen großen Wärmetauscher möglich wäre. Der Einsatz eines Sekundärkreislaufsystems ermöglicht eine von der Kabine entfernten Anordnung der meisten Systemkomponenten, wodurch die Gefahr eines Kontakts des Kältemittels mit dem Bediener verringert wird. Dies ermöglicht weiterhin, dass die Kältemittelleitungen kürzer ausgelegt werden können, so dass auch hierdurch die Effizienz des Kältemittelkreislaufs bzw. des Primärkreislaufs verbessert werden kann. Der Kühlmittel-Kältemittel-Wärmetauscher 30 arbeitet effektiver als konventionelle Kältemittel-Luft-Wärmetauscher, wodurch eine Abkühlung des Kühlmittels auf eine tiefere Temperatur als der der Luft möglich ist. Das Kühlmittel kann einfacher zu anderen Teilen der Kabine geleitet werden, um zusätzliche Wärmetauscher zu versorgen und jeweils eine damit verbundene lokale Kühlung zu ermöglichen. Das Kühlmittel kann einfacher als das Kältemittel gesteuert beziehungsweise geleitet werden, wenn es an mehreren Orten benötigt wird.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Verteilte Kühlvorrichtung für ein Arbeitsfahrzeug, mit einem Primärkreislauf (12) und einem Sekundärkreislauf (14), wobei der Primärkreislauf (12) mit einem Kältemittel betreibbar ist und einen Kompressor (16) und einen Kondensator (18) aufweist, wobei der Sekundärkreislauf (14) eine Kühlmittelpumpe (24), mindestens eine Kühlmittelleitung (32), mindestens eine Rücklaufleitung (34), mindestens einen Kühlmittel-Luft-Wärmetauscher (26) und mindestens einen Lüfter (28), aufweist, wobei mit der Kühlmittelpumpe (24) Kühlmittel zu mindestens einem Kühlmittel-Luft-Wärmetauscher (26A - 26C) pumpbar ist, wobei jedem Kühlmittel-Luft-Wärmetauscher (26A - 26C) jeweils ein Lüfter (28A - 28C) zugeordnet ist, wobei der Sekundärkreislauf (14) über einen Kühlmittel-Kältemittel-Wärmetauscher (30) mit dem Primärkreislauf (12) gekoppelt ist, wodurch Kühlmittel des Sekundärkreislaufs (14) von dem Kältemittel des Primärkreislaufs (12) kühlbar ist, wobei mit der Kühlmittelleitung (32) gekühltes Kühlmittel zu den Kühlmittel-Luft-Wärmetauschern (26A - 26C) leitbar ist, wobei mit der Rücklaufleitung (34) Kühlmittel zur Pumpe (24) und zum Kühlmittel-Kältemittel-Wärmetauscher (30) leitbar ist, wobei die Kühlmittelleitung (32) und die Rücklaufleitung (34) durch die Wand (36) einer Kabine (38) für einen Bediener (40) verlaufen, wobei mindestens ein Kühlmittel-Luft-Wärmetauscher (26C) in einem vorderen Bereich der Kabine (38) - vorzugsweise in einer vorderen Konsole des Fahrzeugs - im Wesentlichen vor dem Bediener (40) angeordnet ist, wobei mindestens einer der Kühlmittel-Luft-Wärmetauscher (26A, 26B) oberhalb und seitlich vor oder hinter dem Kopf des Bedieners (40) angeordnet ist und wobei mindestens ein einem Kühlmittel-Luft-Wärmetauscher (26A - 26C) zugeordneter Lüfter (28A - 28C) individuell ansteuerbar ist, um den Luftfluss durch den entsprechenden Kühlmittel-Luft-Wärmetauscher (26A - 26C) in Abhängigkeit der Bedürfnisse des Bedieners (40) einstellen zu können.

2. Kühlvorrichtung nach Anspruch 1, wobei der Primärkreislauf (12) einen Trockner (20) und ein Expansionsventil (22) aufweist oder dass der Primärkreislauf (12) einen Akkumulator/Sammler und eine Fixdrossel aufweist.

3. Kühlvorrichtung nach Anspruch 1 oder 2, wobei zwei Kühlmittel-Luft-Wärmetauscher (26A, 26B) oberhalb und seitlich vor oder hinter dem Kopf des Bedieners (40) angeordnet sind und/oder dass mindestens ein Kühlmittel-Luft-Wärmetauscher oberhalb des Kopfes des Bedieners (40) angeordnet ist.

4. Kühlvorrichtung nach einem der vorhergehenden Ansprüche, wobei weitere Kühlmittel-Luft-Wärmetauscher vorgesehen sind, welche an zusätzlichen Orten innerhalb des von der Kabine (38) begrenzten Raums zur weiteren verteilten Kühlung angeordnet sind.

5. Kühlvorrichtung nach einem der vorhergehenden Ansprüche, wobei der Kühlmittelfluss von und/oder zu einem Kühlmittel-Luft-Wärmetauscher (26A - 26C) jeweils individuell steuerbar ist, vorzugsweise mit Hilfe mindestens eines Steuerventils.

6. Kühlvorrichtung nach einem der vorhergehenden Ansprüche, wobei mindestens einem Kühlmittel-Luft-Wärmetauscher (26A - 26C) ein Lüfter (28A - 28C) zugeordnet ist und wobei ein mit einem Lüfter (28A - 28C) erzeugbarer Luftstrom steuerbar ist, beispielsweise durch die Steuerung der Winkelgeschwindigkeit, mit welcher ein Lüfter (28A - 28C) betreibbar ist.

7. Kühlvorrichtung nach einem der vorhergehenden Ansprüche, wobei mindestens einem Kühlmittel-Luft-Wärmetauscher (26A - 26C) ein Lüfter (28A - 28C) zugeordnet ist und wobei mindestens eine Luftdüse und/oder eine Luftklappe vorgesehen ist, mit welcher ein von einem Lüfter (28A - 28C) erzeugte Luftstrom steuerbar ist.

8. Kühlvorrichtung nach einem der vorhergehenden Ansprüche, wobei das Kältemittel Kohlendioxid (C02), Kohlenwasserstoff (HC), Kohlenwasserstoffverbindungen, Fluorierten-Kohlenwasserstoff (HFC) oder Fluorierte-Kohlenwasserstoffverbindungen aufweist.

9. Kühlvorrichtung nach einem der vorhergehenden Ansprüche, wobei das Kühlmittel eine Flüssigkeit aufweist oder eine Glykol-Wasser-Mischung oder Ethylenglykol aufweist.

10. Kühlvorrichtung nach einem der vorhergehenden Ansprüche, wobei der Primärkreislauf (12) außerhalb der Kabine (38) angeordnet ist.

11. Fahrzeug, insbesondere ein industrielles oder landwirtschaftliches Nutzfahrzeug, vorzugsweise mit einer Kühlvorrichtung nach einem der Ansprüche 1 bis 10, mit einem Fahrzeugrahmen, einer Kabine (38), einem Primärkreislauf (12) und einem Sekundärkreislauf (14), wobei die Kabine (38) an dem Fahrzeugrahmen angeordnet ist und eine Kabinenwand (36) aufweist, wobei der Primärkreislauf (12) außerhalb der Kabine (38) angeordnet ist, wobei der Sekundärkreislauf (14) über einen Kühlmittel-Kältemittel-Wärmetauscher (30) mit dem Primärkreislauf (12) gekoppelt ist, wobei mindestens eine Kühlmittelleitung (32) und mindestens eine Rücklaufleitung (34) vorgesehen sind, welche durch die Kabinenwand (36) der Kabine (38) verlaufen, wobei eine Kühlmittelleitung (32) mit dem Kühlmittel-Kältemittel-Wärmetauscher (30) verbunden ist und eine Rücklaufleitung (34) mit einer Kühlmittelpumpe (24) des Sekundärkreislaufs (14) verbindbar ist, wobei die Kühlmittelpumpe (24) mit dem Kühlmittel-Kältemittel-Wärmetauscher (30) verbunden ist, wobei mindestens zwei Kühlmittel-Luft-Wärmetauscher (26A - 26C) vorgesehen sind, welchen jeweils ein Lüfter (28A - 28C) zugeordnet ist, wobei die Kühlmittel-Luft-Wärmetauscher (26A - 26C) an unterschiedlichen Orten in der Kabine (38) angeordnet und mit einer Kühlmittelleitung (32) und einer Rücklaufleitung (34) verbunden sind, wobei der Kühlmittel-Kältemittel-Wärmetauscher (30) und die Kühlmittelpumpe (24) außerhalb der Kabine (38) angeordnet sind und wobei das Kühlmittel von dem Kühlmittel-Kältemittel-Wärmetauscher (30) abkühlbar und zu den Kühlmittel-Luft-Wärmetauschern (26A - 26C) in die Kabine (38) pumpbar ist, um einem Bediener (40) eine verteilte Kühlung zur Verfügung zu stellen.

12. Fahrzeug nach Anspruch 11, wobei mindestens ein Kühlmittel-Luft-Wärmetauscher (26C) in einem vorderen Bereich der Kabine (38) - vorzugsweise in einer vorderen Konsole - im Wesentlichen vor dem Bediener (40) angeordnet ist.
